# EUROPEAN PATENT APPLICATION

(11) **EP 1 545 077 A2**
(43) Date of publication of application: **22.06.2005**
(21) Application number: 04030141.8
(22) Date of filing: 20.12.2004
(51) Int. Cl.: H04L 12/56

(54) **Exclusively inserting a training sequence in the first slot of a multi-slot transmission, for instance in GPRS, EDGE or GSM**

(30) Priority: 20.12.2003 KR 2003094188
(71) Applicant: Samsung Electronics Co., Ltd., Suwon-si, Gyeonggi-do (KR)
(72) Inventor: Ryu, Jae-Ahn, Yeongtong-gu Suwon-si Gyeonggi-do (KR)
(74) Representative: Lang, Johannes, Dipl.-Ing.

(57) **Abstract**

Disclosed is a method for transmitting and receiving data in a mobile terminal. The method comprises the steps of: 1) setting a class type according to types of mobile terminals; 2) determining whether or not the mobile terminal is in a transmission mode or a reception mode according to the set class type; 3) determining whether or not transmission data are included in multi-slots if the mobile terminal is in the transmission mode, and then, inserting a training sequence field in a first slot and the transmission data to be transmitted in training sequence fields of next slots and transmitting the transmission data if the transmission data are included in multi-slots, or inserting a training sequence to be transmitted in one slot and transmitting the transmission data to be transmitted if the transmission data are not included in the multi-slots; and 4) determining whether or not reception data are included in multi-slots if the mobile terminal is in the reception mode, and then, detecting training sequence field of a first slot and decoding transmission data of next slots by using training sequence if the reception data are included in multi-slots, or decoding transmission data by using a training sequence of one slot if the reception data are not included in the multi-slots.

## Description

### BACKGROUND OF THE INVENTION

### 1. Field of the Invention

The present invention relates to a method for transmitting and receiving data in a mobile terminal, more particularly to a method for transmitting and receiving data in a mobile terminal, which can improve a data transmission rate by improving data format of transmitted and received data in wireless communication systems such as a global system for mobile (GSM), a general packet radio system (GPRS), and an enhanced data rates for global evolution (EDGE) system.

### 2. Description of the Related Art

Currently, GSM, GPRS, EDGE systems used in the U.S.A and Europe have a more increased data transmission rate than that obtained through conventional wireless communication methods of mobile terminals.

The GSM, GPRS, and EDGE systems employ a training sequence in the middle part of transmission/reception (Tx/Rx) data so as to determine a data format. The GSM, GPRS, and EDGE systems use the training sequence for data recovery or as a trigger of burst. Hereinafter, a transmission data format for Rx and Tx will be described.

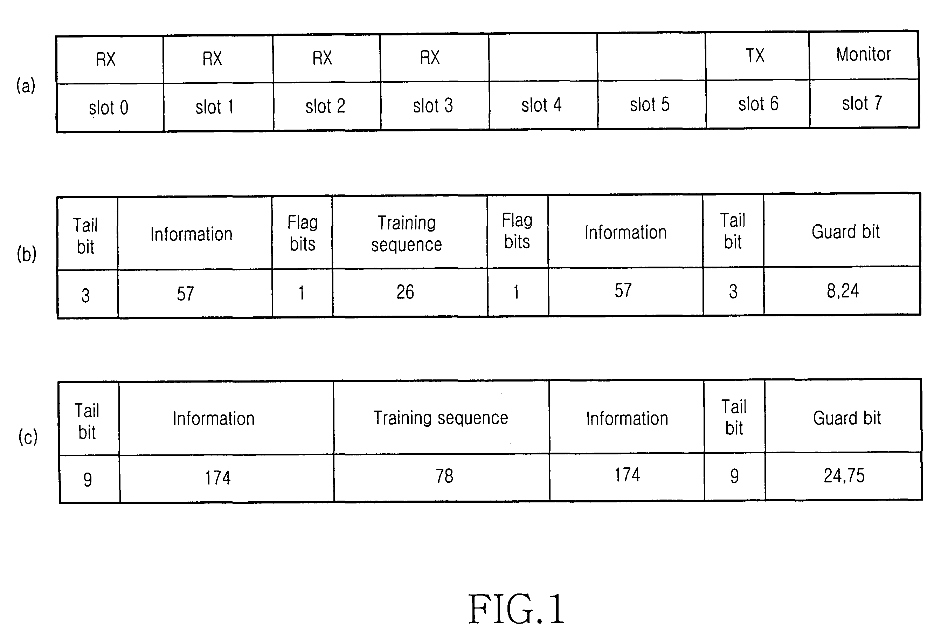

Referring to FIGS. 1A and 1B illustrating multi-slots for transmission/reception data in a conventional GPRS/EDGE system, according to class types of the GPRS /EDGE system, Rx slots (slot 0 to slot 3) and a Tx slot (slot 6) are first determined, and a slot (slot 7) indicating cell information is determined. The Rx/Tx slots (slot 0 to slot 3 and slot 6) have data formats shown in FIGS. 1B and 1C, and description about the data formats will be described below.

FIG. 1B illustrates a data format for a GPRS slot. The data format includes a Tail bit field indicating information about a frame, a data information field containing transmission/reception data, a flag bit field indicating whether information about the data relates to system managing information or data intended by a user for data transmission, a training sequence field indicating information about the data format, data recovery, that is, data decoding, a data information field containing transmission/reception data, a tail bit field indicating information about a frame, and a guard bit field indicating cell information. A data format for an EDGE slot shown in FIG. 1C is similar to the data format for the GPRS slot.

That is, according to the data format described above, data are transmitted together with the training sequence every burst in a GPRS or EDGE system capable of using four Tx data slots or four Rx data slots for one frame, as well as a GSM system using one Tx data slot or one Rx data slot for one frame.

The conventional GPRS/EDGE system determines the number of multi-slots according to class types. As a result of the determination, when the maximum four slots are transmitted, training sequences are inserted in all slots which are transmitted. Inserting the training sequences in all slots limit the quantity of data transmissible by a user because the training sequences are data which are not actually intended to be transmitted by the user but are only necessary for the system.

Accordingly, the conventional data transmitting method for a mobile terminal requires a relatively long time when data to be transmitted by the user are sent.

### SUMMARY OF THE INVENTION

Accordingly, the present invention has been made to solve the above-mentioned problems occurring in the prior art, and one object of the present invention is to provide a method for transmitting and receiving data in a mobile terminal, which enables transmission data to be carried by training sequence fields of multiple slots and properly processes the transmission data when the transmission data are received.

Another object of the present invention is to provide a method for transmitting and receiving data in a mobile terminal, which can improve a data transmission rate by processing data through modification of a transmission/reception data format of transmitted/received data.

In order to accomplish these objects, there is provided a method for transmitting and receiving data in a mobile terminal, the method comprising the steps of: 1) setting a class type according to types of mobile terminals; 2) determining whether or not the mobile terminal is in a transmission mode or a reception mode according to the set class type; 3) determining whether or not transmission data are included in multi-slots if the mobile terminal is in the transmission mode, and then, inserting a training sequence field in a first slot and the transmission data to be transmitted in training sequence fields of next slots and transmitting the transmission data if the transmission data are included in multi-slots, or inserting a training sequence to be transmitted in one slot and transmitting the transmission data to be transmitted if the transmission data are not included in the multi-slots; and 4) determining whether or not reception data are included in multi-slots if the mobile terminal is in the reception mode, and then, detecting training sequence field of a first slot and decoding transmission data of next slots by using training sequence if the reception data are included in multi-slots, or decoding transmission data by using a training sequence of one slot if the reception data are not included in the multi-slots.

### BRIEF DESCRIPTION OF THE DRAWINGS

The above and other objects, features and advantages of the present invention will be more apparent from the following detailed description taken in conjunction with the accompanying drawings, in which:
FIGS. 1A to 1C illustrate multi-slots for transmission/reception (Tx/Rx) data in a conventional GPRS/EDGE system;
FIG. 2 illustrates a structure of a mobile terminal according to one embodiment of the present invention;
FIGS. 3A to 3C illustrate formats of multi-slots for transmission/reception data in a GPRS terminal according to one embodiment of the present invention;
FIGS. 4A to 4C illustrate formats of multi-slots for transmission/reception data in an EDGE terminal according to one embodiment of the present invention; and
FIGS. 5A and 5B are flowcharts data transmitting/receiving procedures of a method for transmitting and receiving data in a mobile terminal according to one embodiment of the present invention.

### DETAILED DESCRIPTION OF THE PREFERRED EMBODIMENT

Hereinafter, preferred embodiments of the present invention will be described in detail with reference to the accompanying drawings. Note that the same or similar components in drawings are designated by the same reference numerals as far as possible although they are shown in different drawings. In the following description of the present invention, a detailed description of known functions and configurations incorporated herein will be omitted when it may make the subject matter of the present invention rather unclear.

Hereinafter, particulars about a GPRS data frame, an EDGE data frame, and slot formats for the data frames will be given for the purpose of helping general understanding of the present invention. However, it is apparent to those skilled in the art that the present invention can be easily embodied (implemented; realized; carried out) without the particulars or through modification of such particulars.

Hereinafter, mobile terminals of GPRS and EDGE systems (GPRS terminal and EDGE terminal) will be described as examples of a mobile terminal.

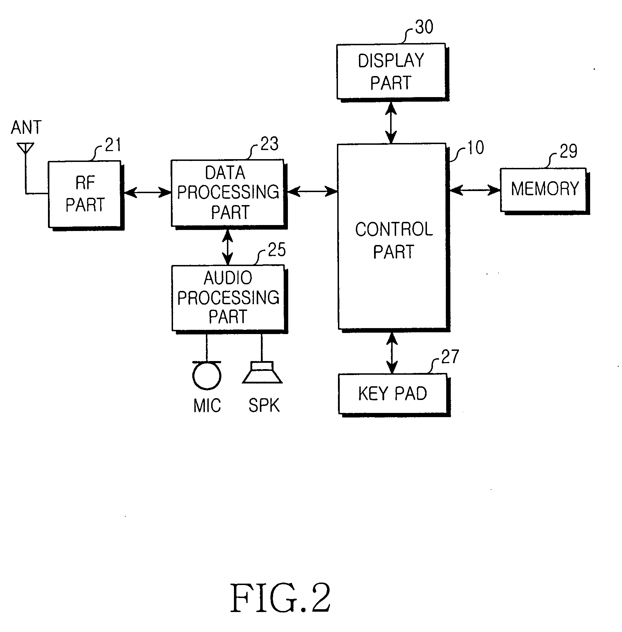

FIG. 2 illustrates a structure of a mobile terminal according to one embodiment of the present invention.

An RF part 21 performs communication of the mobile terminal. The RF part 21 includes an RF transmitter for up-converting and amplifying a frequency of a transmitted signal and an RF receiver for low noise amplifying a received signal and for down-converting a frequency of the received signal. Additionally, the RF part 21 transmits/receives GPRS/EDGE data by means of slots assigned according to setting a class type according to one embodiment of the present invention.

A data processing part 23 includes a transmitter for encoding and modulating the transmitted signal and a receiver for demodulating and decoding the received signal. That is, the data processing part 23 includes an MODEM and a CODEC.

An audio processing part 25 reproduces an audio signal received from the data processing part 23 and outputs the received audio signal to a speaker (SPK), or sends an audio signal transmitted from a microphone to the data processing part 23.

A key pad 27 includes keys for inputting numeral and letter information and function keys for setting a variety of functions. Also, the key pad 27 may include a function key capable of exchanging data or may carry out a mode capable of exchanging data by means of a menu key according to one embodiment of the present invention.

A memory 29 may include program memory units and data memory units. The program memory units store programs for controlling typical operations of the mobile terminal. The data memory units store data generated in the course of executing the programs, data frames received according to one embodiment of the present invention, and information about training sequences in slots of the received data frames.

A control part 10 controls operations of the mobile terminal. The control part 10 may include the data processing part 23. Also, according to one embodiment of the present invention, the control part 10 sets a class type for transmitted data and then transmits the data in accordance with a transmission data frame corresponding to the class type. Furthermore, in the data transmission, the control part 10 inserts training sequence information in a training sequence field of the first slot of the transmitted data frame and inserts the transmission data in the training sequence fields of slots after the first slot of the transmission data frame. Also, when data are received according to one embodiment of the present invention, the control part 10 sets a class type and receives data suitable for a reception data frame corresponding to the class type. Furthermore, the control part 10 controls a data receiving operation such that the control part 10 uses training sequence information included in a training sequence field of the first slot so as to decode reception data of next slots.

A display part 30 displays messages occurring in the course of executing the programs under the control of the control part 10. Also, the display part 30 displays image signals outputted from an image processing part 70 on a screen of the mobile terminal during a photographing mode and user data outputted from the control part 10. The display part 30 may employ LCD. In this case, the display part 30 may include an LCD controller, a memory capable of storing image data, and an LCD display element. Herein, when the LCD is embodied through a touch screen method, the key pad 27 and the LCD may be an input part.

In an operation of the mobile terminal referring to FIGS. 1A to 1C, if a user performs a dialing operation by means of a key pad 27 and then sets an outgoing mode for outgoing data, the control part 10 detects that the outgoing mode has been set and processes dial information received through the data processing part 23. Then, the control part 10 converts the dial information into an RF signal and outputs the RF signal. After that, when the other subscriber generates a response signal, the response signal is detected through the RF part 21 and the data processing part 23. Then, a voice channel is formed through the audio processing part 25, so that the user performs a communication function. Also, when an incoming mode is set, the control part 10 detects through the data processing part 10 that an incoming mode has been set and generates a ring signal through the audio processing part 25. Thereafter, when the user responds to the ring signal, the control part 10 detects the response of the user and a voice channel is formed through the audio processing part 25, so that the control part 10 performs a communication function. A voice communication has been described in the outgoing mode and the incoming mode by way of example. Also, data communication for packet data and image data can be performed in addition to the voice communication. When carrying out a waiting mode or telewriting, the control part 10 displays letter data, which are processed through the data processing part 23, on the display part 80.

According to a procedure for processing transmission/reception data in the GPRS terminal or the EDGE terminal described above, the control part 10 sets class types of the GPRS system or the EDGE system and determines according to the set class type whether the GPRS terminal or the EDGE terminal is in a transmission mode or a reception mode. In the case of the transmission mode, the control part 10 contains corresponding training sequence information in a training sequence field of the first slot among multi-slots and transmits the training sequence information. Also, the control part 10 extracts transmission data stored in the memory 29, inserts the transmission data in training sequence fields of next slots, and transfers the transmission data.

As a result of the determination, if the GPRS system or the EDGE system is in a reception mode, the control part 10 detects corresponding training sequence information included in a training sequence field of the first sequence slot among multi-slots and decodes reception data of next slots by using the sequence information.

Hereinafter, formats of multi-slots for transmission/reception data according to the present invention will be described.

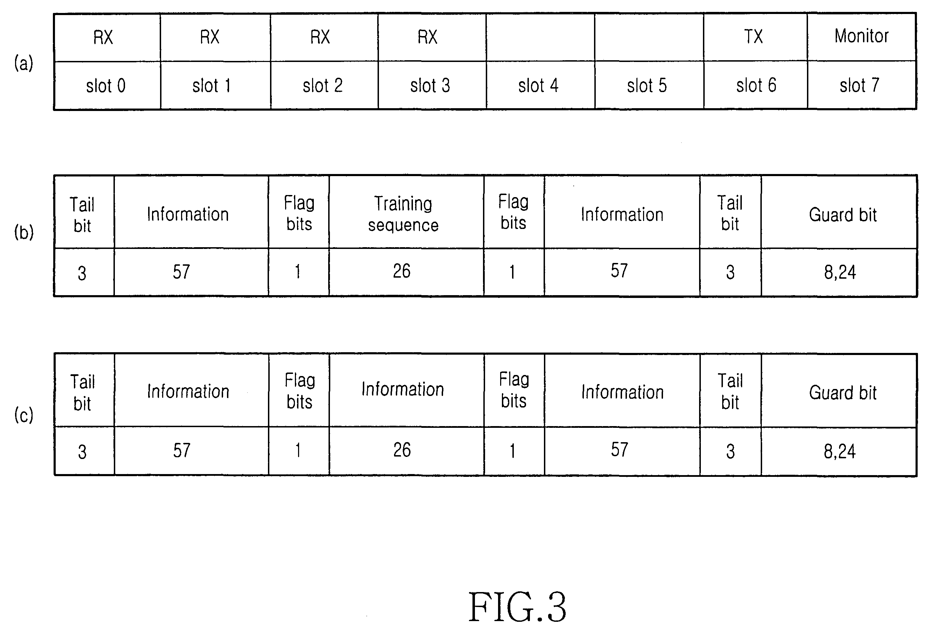

FIGS. 3A to 3C illustrate formats of multi-slots for transmission/reception data in a GPRS terminal according to one embodiment of the present invention.

FIG. 3A illustrates an example of a data frame for the GPRS terminal according to class types. The data frame has the same format as shown in FIG. 1A. The data frame includes slots (slot 0 to slot 3) for reception data, a slot (slot 6) for transmission data, and a monitor slot (slot 7) for cell information.

A data format of the first slot for the GPRS terminal includes 148 bits, excluding a Guard bit, from a Tail bit of the first field to a Tail bit of the last field as shown in FIG. 3B. 26 bits of the 148 bits are used for training sequence information of a training sequence field.

However, training sequence fields of slots after the first slot have transmission data or reception data replacing training sequence information. That is, differently from FIG. 3B, reception (Rx) data with 26 bits replacing training sequence information with 26 bits are included in the training sequence field and transmitted as shown in FIG. 3C. Thereafter, a slot (slot 6) for transmission data (Tx) after slots assigned for reception data has a data format identical to the data formats of the slots for reception data. Also, a training sequence filed of the slot for transmission data has transmission data with 26 bits.

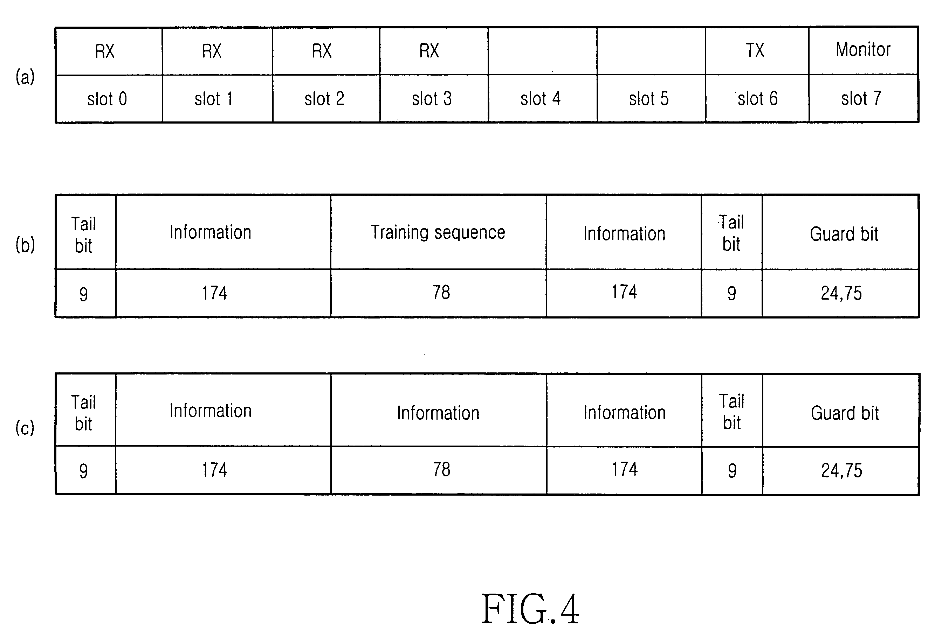

The format of the transmission/reception data frame for the GPRS terminal shown in FIG. 3A is the same as a format of transmission/reception data frame for the EDGE terminal shown in FIG. 4A. Also, the GPRS terminal and the EDGE terminal have the same format for multi-slots of the transmission/reception data frame. However, the transmission/reception data frames shown in FIGS. 3A and 4A have different numbers of total bits assigned for a slot and different numbers of bits assigned for each field of the slot.

That is, as a data format of the first slot shown in FIG. 4B and data formats of slots after the first slot shown in FIG. 4C are depicted, data formats shown in FIGS. 3B, 3C, 4B, and 4C have different numbers of bits for a Tail bit field, an information field, a Training sequence bit field, and a Guard bit field.

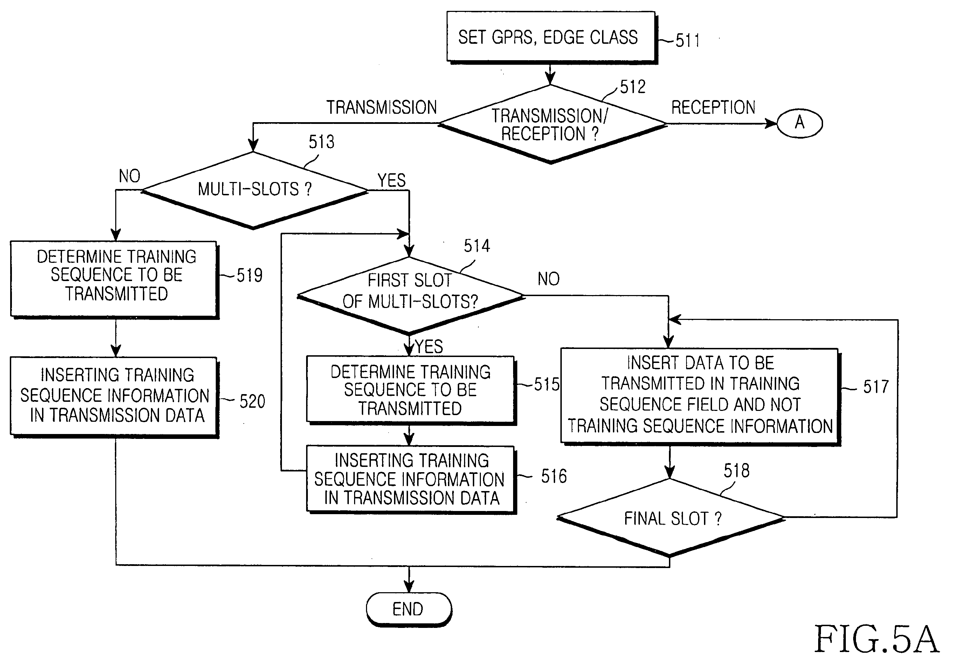

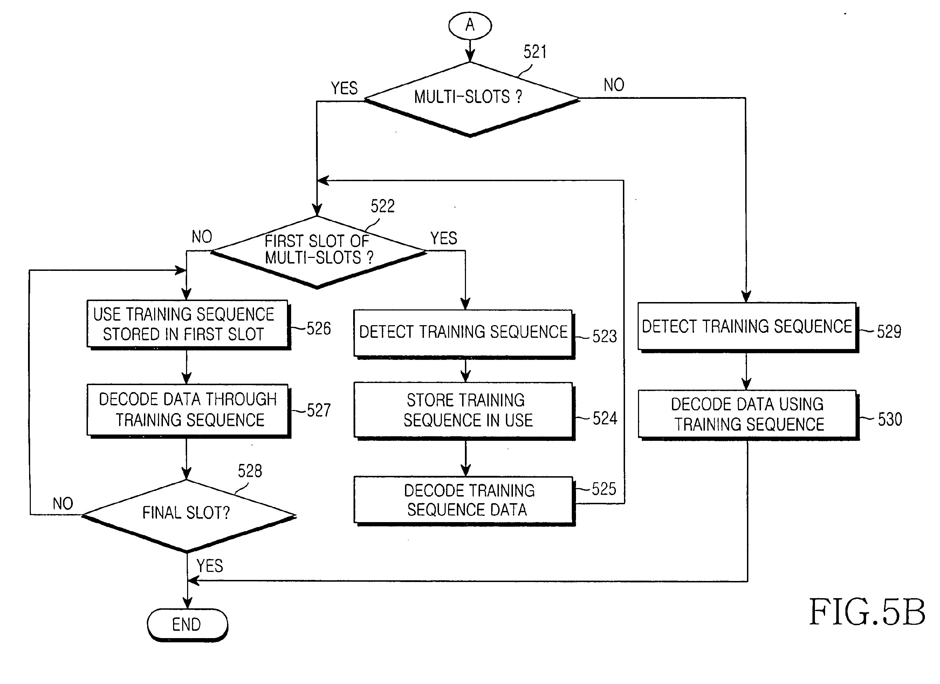

FIGS. 5A and 5B are flowcharts data transmitting/receiving procedures of a method for transmitting and receiving data in the mobile terminal according to one embodiment of the present invention.

First, the control part 10 sets a GPRS/EDGE class type in step 511. After that, the control part 10 performs step 512 so as to determine whether or not the mobile terminal is in a data transmission (Tx) mode or a data reception (Rx) mode.

As a result of the determination, if the mobile terminal is in the data transmission (Tx) mode, the control part 10 determines whether or not a slot type according to the class type is a multi-slot type in step 513. If a slot type according to the class type is the multi-slot type, the control part 10 performs step 514 so as to determine whether or not a slot for data to be transmitted is the first slot among multi-slots.

As a result of the determination in step 514, if a slot for data to be transmitted is the first slot, the control part 10 determines training sequence information according to data to be transmitted and the set class type in step 515. The control part 10 includes the training sequence information in transmission data in step 516 and transfers the transmission data. Thereafter, the control part 10 returns to step 514.

Then, the control part 10 determines whether or not a slot for data to be transmitted is the first slot among multi-slots. If a slot for data to be transmitted is not the first slot, the control part 10 performs step 517 so as to include the data replacing the training sequence information in the training sequence field and transfer the data.

The control part 10 performs step 518 so as to determine whether or not a slot for data to be transmitted is the last slot. If a slot for data to be transmitted is the last slot, data transmission is terminated. If a slot for data to be transmitted is not the last slot, the control part 10 returns to step 517 and repeats step 517 until a slot for data to be transmitted is the last slot.

In the meantime, as a result of the determination in step 513, if a slot type for data to be transmitted is not a multi-slot type, the control part 10 determines training sequence information according to data to be transmitted and the set class type in step 519. Thereafter, the control part 10 includes the training sequence information in the data to be transmitted and transmits the data to be transmitted in step 520. Then, data transmission is terminated.

Meanwhile, if the mobile terminal is in a reception mode as result of the determination in step 512, the control part 10 performs step 521 so as to determine whether or not a slot-type for reception data is a multi-slot type.

As a result of the determination, if the slot-type for reception data is a multi-type, the control part 10 determines whether or not a slot for reception data is the first slot among multi-slots in step 522. If the slot for reception data is the first slot, the control part 10 detects training sequence information in step 523 and stores the training sequence information in the memory 29 in step 524.

After that, the control part 10 decodes reception data of the first slot by using the training sequence information in step 525 and returns to step 522.

The control part 10 determines whether or not a slot for reception data is the first slot among multi-slots. If the slot for reception data is not the first slot, the control part 10 reads the training sequence information, which has been stored in the memory 29 in step 524, in step 526.

The control part 10 decodes reception data of multi-slots by using the read training sequence information in step 527.

After that, the control part 10 determines whether or not a slot for reception data is the last slot of multi-slots in step 528. If the slot for reception data is not the last slot, the control part 10 returns to step 526 and repeats steps 526 to 528 until the slot for the reception data is the last slot.

In the meantime, as a result of the determination in step 521, if the slot type is not a multi-slot type, the control part 10 detects training sequence information of reception data in step 529 and decodes the reception data by using the training sequence information in step 530.

As a result, when GPRS multi-slots are employed as shown in FIG. 3A to 3C through the above described procedure, since four slots (slot 0 to slot 3) for the GPRS multi-slots are used, transmission data with 72 bits obtained by multiplying 26 bits by 3 can be transmitted. Also, when EDGE multi-slots are employed as shown in FIGS. 4A to 4C, since four slots (slot 0 to slot 3) for the EDGE multi-slots are used, transmission data with 234 bits obtained by multiplying 78 bits by 3 can be transmitted.

Therefore, in a method for transmitting/receiving data in a GPRS/EDGE terminal according to the present invention, training sequence information is included in the first slot and transferred, and transmission/reception data and not the training sequence information are additionally included in training sequence fields of next slots and transmitted, so that a greater amount of data can be more rapidly transmitted by using the training sequence information of the first slot.

Also, when such data are received, a time required for receiving data is reduced, and the received data can be processed more rapidly because it is unnecessary to detect the training sequence information in slots after the first slot.

As described above in detail, according to the present invention, a class type for transmission data is set, a corresponding training sequence is included in a training sequence field of the first slot among multi-slots according to the set class type and transmitted, and data to be transmitted are additionally included in training sequence fields of next slots, so that a greater amount of data can be more rapidly transmitted. Therefore, a data transmission rate can be increased.

Also, a reception terminal processing such transmitted data stores training sequence information of the first slot and processes data of next slots by using the stored training sequence information of the first slot, so that it is unnecessary to detect training sequence information for every slots. Therefore, a data processing time can be reduced.

While the invention has been shown and described with reference to certain preferred embodiments thereof, it will be understood by those skilled in the art that various changes in form and details may be made therein without departing from the spirit and scope of the invention. Consequently, the scope of the invention should not be limited to the embodiments, but should be defined by the appended claims and equivalents thereof.

## Claims

1. A method for transmitting and receiving data in a mobile terminal, the method comprising the steps of:
1) setting a class type according to types of mobile terminals;
2) determining whether or not the mobile terminal is in a transmission mode or a reception mode according to the set class type;
3) determining whether or not transmission data are included in multi-slots if the mobile terminal is in the transmission mode, and then, inserting a training sequence field in a first slot and the transmission data to be transmitted in training sequence fields of next slots and transmitting the transmission data if the transmission data are included in multi-slots, or inserting a training sequence to be transmitted in one slot and transmitting the transmission data to be transmitted if the transmission data are not included in the multi-slots; and
4) determining whether or not reception data are included in multi-slots if the mobile terminal is in the reception mode, and then, detecting training sequence field of a first slot and decoding transmission data of next slots by using training sequence if the reception data are included in multi-slots, or decoding transmission data by using a training sequence of one slot if the reception data are not included in the multi-slots.

2. The method as claimed in claim 1, wherein step 3) further includes the steps of:
if the transmission data are included in the multi-slots, determining whether or not a slot for the transmission data is the first slot among the multi-slots;
if the slot for the transmission data is the first slot, determining a training sequence to be transmitted, inserting the training sequence in the training sequence field for the transmission data, and transmitting the transmission data; and
if the slot for the transmission data is not the first slot, repeatedly inserting the transmission data in the training sequence fields until the last slot and transmitting the transmission data.

3. The method as claimed in claim 1, wherein step 4) further includes the steps of:
if the reception data are included in the multi-slots, determining whether or not a slot for the reception data is the first slot among the multi-slots;
if the slot for the reception data is the first slot among the multi-slots, detecting a training sequence of the first slot, storing the training sequence, and decoding the reception data by using the training sequence; and
if the slot for the reception data is not the first slot, repeatedly decoding the reception data by using the stored training sequence of the first slot until the last slot.
